# EUROPEAN PATENT APPLICATION

(11) **EP 0 762 391 A1**
(43) Date of publication of application: **12.03.1997**
(21) Application number: 96113918.5
(22) Date of filing: 30.08.1996
(51) Int. Cl.: G11B 5/84

(54) **Method for production of magnetic recording medium**

(30) Priority: 31.08.1995 JP 246604/95
(71) Applicant: TDK Corporation, Chuo-ku, Tokyo (JP)
(72) Inventor: Kaneko, Tomofumi, Saku-shi, Nagano-ken (JP); Tokuda, Fuminori, Ichikawa-shi, Chiba-ken (JP)
(74) Representative: Hansen, Bernd, Dr. Dipl.-Chem.

(57) **Abstract**

In the production of a magnetic recording medium, a method of this invention which comprises preparatorily cleaning the surfaces of the metallic rolls to be used for the calendering treatment and thereafter subjecting the surfaces of the metallic rolls to a lubricating treatment with a lubricant-containing solution permits the calendering treatment to be stably carried out without entailing fast adhesion of an extraneous substance to the surfaces of the metallic rolls, and a method of this invention which comprises intermittently or continuously cleaning the surfaces of the metallic rolls to be used for the calendering treatment with a cleaning material impregnated with a lubricant manifests an effect of preventing the cleaning material from shedding fibers, precluding the heretofore problematic phenomenon of dropout ascribable to exfoliated fibers, and avoiding a decline in the yield of production.

## Description

### BACKGROUND OF THE INVENTION

### Field of the Invention

This invention relates to a method for the production of a magnetic recording medium to be used for the purpose of recording and regenerating images, sounds, data, etc.

### Description of the Prior Art

In the conventional method for the production of a magnetic recording medium which is provided on a nonmagnetic supporting material with a magnetic layer containing a magnetic powder, the practice of subjecting the deposited magnetic layer to a calendering treatment for the purpose of improving the surface smoothness of the magnetic layer has been in vogue. This calendering treatment is implemented, for example, by the use of a plurality of mirror-ground metallic rolls longitudinally arranged in a row and similarly mirror-ground resinous or metallic calender rolls. As the supporting material having the magnetic layer applied thereon is passed in a heated and pressed state between the calender rolls, the surface of the magnetic layer which directly contacts the metallic rolls acquires extremely high smoothness.

Since the metallic rolls are always kept heated and pressed against the magnetic layer, the constituent components of the magnetic layer such as, for example, the binder component are transferred from the surface of the magnetic layer to the surface of the metallic roll and deposited fast thereon. The deposit of this nature induces the infliction of a dent on the surface of the magnetic layer, brings about an adverse effect on the surface smoothness of the magnetic layer, and results in the occurrence of a dropout.

Various proposals have been heretofore made for the solution of this problem (as disclosed in JP-A-01-312731, JP-A-02-28458, and JP-A-04-228111, for example). JP-A-01-312,731, for example, has a proposal to the effect that the removal of the adhesive dirt from the surfaces of the metallic rolls is accomplished without a sacrifice of productivity by performing an extra calendering treatment on a web which has been deprived of the magnetic layer subsequently to the regular calendering treatment.

JP-A-02-28458 concerns a method for cleaning the surfaces of the metallic rolls by moving a cleaning member relative to the direction of width of contact of the metallic rolls and cites a non-woven fabric or a non-woven fabric impregnated with a solvent or a detergent as a typical example of the cleaning member.

JP-A-04-228111 discloses a calender roll cleaning apparatus provided with a cleaning tape for wiping the surfaces of metallic rolls and an elastic belt formed of an elastomer and makes a proposal to the effect that the cleaning tape (provided with an abrasive layer) is pressed against the calender rolls by virtue of the pressure exerted by the elastic belt from the rear surface side of the calender rolls.

The method proposed by JP-A-01-312731 which simply resides in performing the calendering treatment on the web, however, is at a disadvantage in failing to effect thorough removal of a dirt that adheres fast (as by seizure or discoloring) to the metallic rolls. This method does not preclude the adhesion of an adhesive dirt to the surfaces of the metallic rolls.

The inventions disclosed in JP-A-02-28458 and JP-A-04-228111 pay no due consideration to the thorough prevention of the cleaning member or the cleaning tape from being worn by the high-speed contact thereof at an elevated temperature with the surfaces of the metallic rolls and have the possibility of inducing secondary deposition of an adhesive dirt owing to the wear of the cleaning member, for example. Specifically, when the metallic rolls are cleaned while the calendering treatment is in process, the friction of the nonwoven fabric used as a cleaning member against the surfaces of the rolls inevitably entails abrasion and exfoliation of fine fibers and the abraded and exfoliated fibers impair the calendered surfaces and the exfoliated fibers result in the occurrence of a dropout, possibly to the extent of degrading the quality and yield of the product. These inventions are not intended to preclude the deposition of an adhesive dirt on the surfaces of the metallic rolls.

This invention has been created in the light of the true state of prior art described above. An object of this invention is to provide a magnetic recording medium excelling in quality and enjoying high yield of production while precluding the aforementioned problems attendant on the calendering treatment. More particularly, this invention has an object of providing a method for the production of a magnetic recording medium which is capable of (1) precluding the adhesion of the components of the magnetic layer to the surfaces of the metallic rolls during the calendering treatment and (2) cleaning the surfaces of the metallic rolls while repressing to the fullest possible extent the abrasion of the cleaning material and the secondary deposition of defoliated fibers even when the adhesion of the components of the magnetic layer is suffered to occur.

### SUMMARY OF THE INVENTION

To accomplish the object mentioned above, this invention provides a method for the production of a magnetic recording medium by applying to one surface of a nonmagnetic supporting material a magnetic coating material comprising a magnetic powder and a binder thereby forming a magnetic layer, drying the applied magnetic layer, and thereafter subjecting the dried magnetic layer to a calendering treatment, which method further comprises a step of pretreating metallic rolls for use in the calendering treatment prior to starting the production, the pretreating step comprising the steps of cleaning the surfaces of the metallic rolls to be used for the calendering treatment with a solvent and subsequently treating the surfaces of the metallic rolls with a lubricant-containing solution.

Further, to accomplish the object mentioned above, this invention provides a method for the production of a magnetic recording medium by applying to one surface of a nonmagnetic supporting material a magnetic coating material comprising a magnetic powder and a binder thereby forming a magnetic layer, drying the applied magnetic layer, and thereafter subjecting the dried magnetic layer to a calendering treatment, wherein the calendering treatment includes an operation of cleaning surfaces of metallic rolls and the cleaning operation comprises intermittently or continuously cleaning the surfaces of the metallic rolls for use in the calendering treatment with a cleaning material impregnated with a lubricant.

Further, to accomplish the object mentioned above, this invention provides a method for the production of a magnetic recording medium by applying to one surface of a nonmagnetic supporting material a magnetic coating material comprising a magnetic powder and a binder thereby forming a magnetic layer, drying the applied magnetic layer, and thereafter subjecting the dried magnetic layer to a calendering treatment, wherein the method further comprises a step of pretreating metallic rolls for use in said calendering treatment prior to starting the production, said pretreating step comprises the steps of cleaning the surfaces of said metallic rolls to be used for said calendering treatment with a solvent and subsequently treating said surfaces of said metallic rolls with a lubricant-containing solution, said calendering treatment includes an operation of cleaning surfaces of metallic rolls, and said cleaning operation comprises intermittently or continuously cleaning said surfaces of said metallic rolls for use in said calendering treatment with a cleaning material impregnated with a lubricant.

In the preferred embodiment of this invention, said lubricant to be used in this invention has a melting point not higher than the temperature at which said calendering treatment is carried out.

In the present invention described above, the method for the production of a magnetic recording medium which comprises preparatorily cleaning the surfaces of the metallic rolls to be used for the calendering treatment and thereafter subjecting the surfaces of the metallic rolls to a lubricating treatment with a lubricant-containing solution permits the calendering treatment to be stably carried out without entailing fast adhesion of an extraneous substance to the surfaces of the metallic rolls and the method for the production of a magnetic recording medium which comprises intermittently or continuously cleaning the surfaces of the metallic rolls to be used for the calendering treatment with a cleaning material impregnated with a lubricant manifests an effect of preventing the cleaning material from shedding fibers, precluding the heretofore problematic phenomenon of dropout ascribable to exfoliated fibers, and avoiding a decline in the yield of production.

### BRIEF DESCRIPTION OF THE DRAWINGS

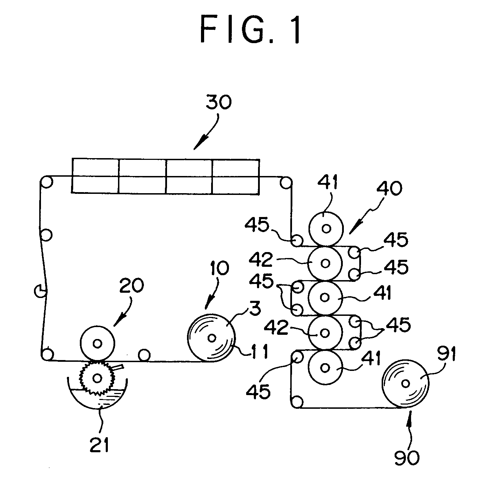

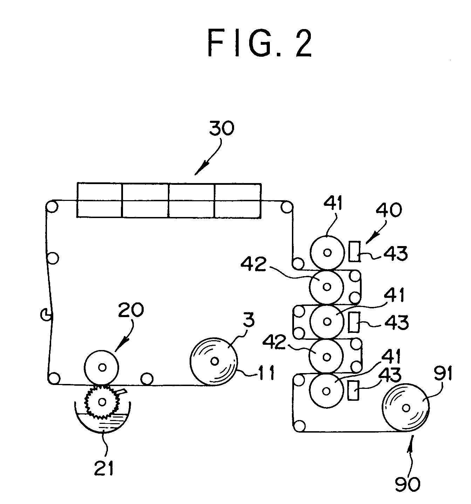

Fig. 1 is a schematic production process diagram showing one example of the method for the production of a magnetic recording medium according to this invention and Fig. 2 is a schematic production process diagram showing another example of the method for the production of a magnetic recording medium according to this invention.

### DETAILED DESCRIPTION OF THE INVENTION

Now, one example of the method for the production of a magnetic recording medium according to this invention is described below with reference to the schematic production process diagram of Fig. 1.

With reference to Fig. 1, an unwinding device 10 which is provided with a roll 11 having a nonmagnetic supporting material 3 wound thereon is disposed on the most upstream side. From the roll 11 onward toward the downstream side, an applying device 20 for a magnetic coating material 21, a drying device 30, a device 40 for a calendering treatment, and a rewinding device 90 are sequentially disposed as main devices in the order mentioned.

The essence of the first aspect of this invention concerns a step for pretreating the metallic rolls to be used for the calendering treatment prior to starting the production. This pretreating step comprises preparatorily cleaning the surfaces of the metallic rolls to be used for the calendering treatment with a solvent and thereafter subjecting the surfaces of the metallic rolls to a lubricating treatment with a lubricant-containing solution.

The device 40 for a calendering treatment is provided with a plurality of calender rolls 41, 42 which are arranged in a row as shown in Fig. 1. The supporting material having a magnetic layer formed thereon is passed as pressed and heated between the calender rolls. The calender roll 41 is disposed on the side for contact with the front surface of the magnetic layer and the calender roll 42 is disposed on the side for contact with the rear surface of the supporting material (the side not be formed the magnetic layer). In this invention, the calender roll 41 on the side for contact with the front surface of the magnetic layer is a metallic roll (metallic roll 41) and the calender roll 42 on the side for contact with the rear surface of the supporting material may be a resinous roll or a metallic roll, whichever better suits the occasion. As concrete examples of the resin to be used for the resinous roll, such plastic substances as epoxy, polyesters, nylons, polyimide, and polyimidamide which are resistant to heat may be cited. The resin may have carbon, a metal, and other inorganic compounds incorporated by kneading therein.

Generally, these calender rolls 41 and 42 are used as composition at about three to seven stages (5 stages of composed rolls shown in Fig. 1). The temperature of the calendering treatment is preferably not less than 70°C more preferably not less than 80 °C. The linear pressureunder which the composite ribbon (the supporting material bearing the magnetic layer) is nipped between the opposed rolls is preferably not less than 200 kg/cm, morepreferably not less than 300 kg/cm.

The calendering treatment described above is carried out at all for the purpose of heightening the surface smoothness of the magnetic recording medium and enhancing the electromagnetic conversion characteristic thereof consequently. At the outset of the production, therefore, the metallic rolls 41 (and the calender rolls 42 as well) are naturally in a cleaned state. When the metallic rolls 41 which have been cleaned solely with a standard solvent are put to use, the constituent components of the magnetic layer are inevitably liable to be transferred as an adhesive dirt to the metallic rolls 41 during the initial stage of the calendering treatment. Once the constituent components of the magnetic layer are transferred to the metallic rolls, they serve as cores of the so-called dirt and then quickly disseminate the dirt throughout the entire surfaces of the metallic rolls. This invention, therefore, subjects the surfaces of the metallic rolls to a lubricating treatment with a lubricant-containing solution in addition to the cleaning with a solvent.

The method for implementing the lubricating treatment has no particular restriction. It has only to be capable of forming a film of lubricant on the surfaces of the metallic rolls 41. One preferred method for effecting the lubricating treatment comprises preparing a lubricant-containing solution by causing a solvent to contain therein a lubricant at a ratio in the approximate range of 1 ‾ 10 wt%, based on the amount of the solvent, applying the lubricant-containing solution to the surfaces of the metallic rolls 41 with the aid of nonwoven fabric, sponge, cellulose sponge, foam rubber, synthetic resin sponge, or the like which can be impregnated with the lubricant-containing solution, and drying the formed film. The application of the lubricant-containing solution may be performed either manually or automatically with a mechanical device.

Preferably, the lubricant to be used herein has a melting point not exceeding the temperature at which the calendering treatment is carried out. When the magnetic layer of the magnetic recording medium contains a lubricant, it is appropriate that the lubricant to be selected herein is equal to that in the magnetic layer. As concrete examples of this lubricant, fatty acids such as lauric acid, myristic acid, palmitic acid, stearic acid, oleic acid, linoleic acid, linolenic acid, behenic acid, erucic acid, and elaidic acid; fatty esters such as butyl myristate, butyl palmitate, butyl stearate, sorbitan monostearate, sorbitan distearate, sorbitan tristearate, oleyl oleate, isocetyl stearate, isotridecyl stearate, octyl stearate, isooctyl stearate, amyl stearate, butoxyethyl stearate, and neopentyl glycol dioleate; fatty acid amides, various silicones, modified silicones, castor oil, and squalane may be cited. These lubricants may be used either singly or in the form of a mixture of two or more members.

The solvents which are generally usable for dissolving the lubricant include ketones such as methylethyl ketone, methyl-isobutyl ketone, and cyclohexanone; aromatic hydrocarbons such as toluene and xylene; esters such as ethyl acetate and butyl acetate; alcohols such as isopropanol and butanol; and dioxane, tetrahydrofuran, dimethyl formamide, hexane, and hydrocarbons having chlorine as a substituent may be cited. The solvent which is used for the cleaning prior to the lubricating treatment may be suitably selected from among the solvents that are cited above. This solvent may be used as mixed with water of an amount not too large to induce suspension and separation of opaque particles in the resultant mixture. The method to be used for the cleaning with a solvent is not particularly limited. It may be selected from among various known methods that are available at all for this purpose.

After the surfaces of the metallic rollers 41 for use in the calendering treatment have been preparatorily cleaned with the solvent and the surfaces of the metallic rollers 41 have subsequently undergone the lubricating treatment with the lubricant-containing solution as described above, the regular production of magnetic recording media according to the procedure shown in Fig. 1 is started. Now, this production will be briefly described below.

The applying device 20 is provided with means which serves to deposit the magnetic coating material 21 on one surface of the nonmagnetic supporting material 3 drawn from the roll 11. As a result, a coating to be used for forming the magnetic layer is obtained. The method of application to be actually used may be selected from among various known methods available at all for the application such as, for example, the extrusion nozzle coating method, reverse roll coating method, gravure roll coating method, knife coater method, doctor blade coating method, kiss coating method, color coating method, and slide bead coating method. The coating thickness is in the approximate range of 0.05 - 8.0 µm on dry basis.

The surface of the nonmagnetic supporting material 3, more often than not, is generally treated prior to the application of the magnetic coating material 21 thereto for the purpose of cleaning and surface adjustment by any of various known methods such as, for example, the wet cleaning using water or a solvent, the dry cleaning using a nonwoven fabric or a woven fabric of fine fibers as a wiper, and the noncontact type cleaning using compressed air, a vacuum, or ionized air. Further, the surface of the nonmagnetic supporting material 3 is often treated for the purpose of exalting the fastness of adhesion of the magnetic coating material 21 and the nonmagnetic supporting material 3 and improving the coating surface by various known noncontact methods such as corona discharge, irradiation with the ultraviolet light, and irradiation with the electron beam.

The surface of the nonmagnetic supporting material 3 may be further treated with a water type undercoating solution, an emulsion type undercoating solution, or a solvent type undercoating solution either independently or in combination with the surface treatment mentioned above for the purpose of enhancing the fastness of adhesion. Instead of the undercoating layer formed solely of resin, an undercoating layer which is formed of a coating material prepared by dispersing a nonmagnetic inorganic pigment in a binder may be used. This application of the undercoating layer may be carried out also in combination with the surface treatment mentioned above.

Though the magnetic layer is generally formed singly, two or more magnetic layers may be jointly formed for the purpose of imparting an enhanced function to the magnetic recording medium. In this case, the deposition of the plurality of magnetic layers may be attained by any of known methods such as, for example, the wet-on-dry method and the wet-on-wet method.

Generally after the step of applying the magnetic layer as described above, the wet surface of the magnetic coating layer deposited on the nonmagnetic supporting material 3 may be subjected to various treatments such as smoothing and regulation of coating thickness. The smoothing may be accomplished by any of various known means such as a contact method, in which film or bar made of resinous, metallic, or ceramic substance is adapted to slide on a given surface and non-contact method, in which a permanent magnet or an electromagnet adapted to harness a magnetic field and an ultrasonic wave adapted to utilize oscillation are applied for adjusting the surface. These means may be used either singly or in combination, depending on the kind of characteristic demanded.

After the magnetic layer has been deposited, it must be exposed to a magnetic field, though not illustrated in the drawing, for the purpose of orienting the magnetic particles in the deposited layer. This orientation may be made in a longitudinal direction, a vertical direction, or an oblique direction relative to the direction of travel of the medium. The orientation of the magnetic particles in a prescribed direction may be attained by any of various known means available for the generation of a magnetic field such as, for example, permanent magnets represented by ferrite magnets and rare earth magnets, electromagnets, and solenoids. A plurality of these means for magnetic field generation, when necessary, may be simultaneously used. In order to get the maximized degree of orientation of the magnetic particles after the deposited magnetic layer being dried, a suitable predrying step may precede the step of orientation or may proceed simultaneously therewith.

Generally, the drying device 30 is disposed after the site for the treatment of orienting the magnetic field of the deposited magnetic layer along the course of the production.

The drying device 30 is installed for the purpose of drying the layer (magnetic layer) of the magnetic coating material 21 deposited on one surface of the nonmagnetic supporting material 3. The drying device 30 is generally provided therein with any of various known drying means such as the hot air blower, farinfrared radiation unit, electric heater, and a vacuum drier.

The drying device 30 is adapted to generate a drying temperature in the approximate range of 50-200°C and impart a varying suitable temperature distribution pattern to the drying zone formed therein. The temperature conditions actually used are suitably set by considering such factors as the ability of the nonmagnetic supporting material 3 to resist heat and the kind and concentration of the solvent in the magnetic coating material in view of the amount of the solvent which remains in the medium when the deposited layer is ultimately hardened as specifically described hereinbelow. As the gaseous atmosphere in the drying device (furnace), the ordinary air or an inert gas may be used.

The device 40 for a calendering treatment for the next step is installed, as already described, for the purpose of exalting the surface smoothness of the magnetic recording medium and enhancing the electromagnetic conversion characteristic thereof consequently. In this invention, since the calender rolls to be used for the calendering treatment are subjected to a treatment preparatorily to the start of the production as described above, the transfer of the constituent components of the magnetic layer as an adhesive dirt to the rolls which is liable to occur during the initial stage of the production never happens. The device 40 for the calendering treatment is provided with a plurality of auxiliary rolls 45 adapted to smooth the calendering treatment in addition to the metallic rolls 41 and the calender rolls 42 mentioned above.

The rewinding device 90 is installed for the purpose of provisionally taking up on a rewinding roll 91 a magnetic recording medium which has undergone the series of such steps as the application of the coating, drying, and calendering treatment mentioned above and has consequently acquired a decent appearance (hereinafter referred to as "green film of magnetic recording medium").

It is permissible to rewind the composite ribbon prior to the calendering treatment (after the drying step) and then subject this composite ribbon to a calendering treatment by means of such devices as an unwinding device, calendering device, and rewinding device which are arranged serially in order.

The "green film of magnetic recording medium" rewound as described above is subjected to a hardening treatment at the next step of hardening the deposited layer either directly in the rolled state or after being left standing for a prescribed length of time or after being unwound provisionally and then rewound when the hardening is effected by heating as specifically described afterward. It is subjected to a hardening treatment at the step of hardening the deposited layer before it is rewound on the rewinding roll 91 when the hardening is effected by means of electron beams (or ultraviolet radiation) as specifically described hereinbelow.

The hardening treatment by heating is effectively carried out, for example, at a temperature in the range of 40°C - 80 °C for a period in the approximate range of 24 - 48 hours. The hardening treatment by the exposure to electron beams is advantageously effected by using an electron beam accelerator having an acceleration voltage in the range of 100 kV - 750 kV, preferably 150 kV - 300 kV, at an absorption dosage in the range of 20 - 200 kilogray(Gy).

In the case of the hardening treatment by the exposure to electron rays, it is important that the exposure to the electron rays be carried out in the atmosphere of an inert gas such as N₂, He, or CO₂ having an oxygen concentration of not more than 1%. This is because the O₃ generated by the exposure to electron rays should be prevented from seizing radicals.

When the hardening treatment is effected by exposure to ultraviolet light, it suffices to prepare a binder containing a resin hardenable by electron rays and further incorporating therein a known photopolymerizing sensitizer and expose this binder to the ultraviolet light. The exposure to the ultraviolet light may be carried out by means of an ultraviolet light bulb such as, for example, a xenon discharge bulb or a hydrogen discharge bulb.

Then, the hardened green film is formed in a prescribed shape by the use of a slitter and then subjected to a secondary fabrication to produce a magnetic recording medium (such as, for example, a magnetic tape).

Fig. 2 depicts another aspect of this invention. In Fig. 2, like parts found in Fig. 1 are denoted by like reference numerals and adapted to fulfill like functions. The invention illustrated in Fig. 2 is characterized by a cleaning operation which is performed on the metallic rolls 41 during the course of the production. To be specific, this cleaning operation is characterized in that the surfaces of the metallic rolls to be used for the production are intermittently or continuously cleaned by the use of a cleaning material impregnated with a lubricant.

The cleaning material to be used is variable with such factors as the material of the metallic rolls, the surface thereof, and the temperature and speed of the fabrication. As concrete examples of the cleaning material to be favorably used, nonwoven fabric, foamed urethane sheet, cleaning cloth, and foam rubber sponge which are capable of being impregnated with a lubricant may be cited.

The lubricant for impregnating the cleaning material may be suitably selected from among the lubricants cited above. In this case again, the lubricant appropriately has a melting point not higher than the temperature at which the calendering treatment is carried out. When the magnetic layer of the magnetic recording medium contains a lubricant, it is appropriate that the lubricant to be selected herein is equal to that in the magnetic layer.

As concerns the method for impregnating the cleaning material with the lubricant, when a cleaning cloth is used as the cleaning material, for example, the impregnation can be attained by rewinding the cleaning cloth of a prescribed length, immersing the rewound cleaning cloth in a methyl ethyl ketone (MEK) solution containing butyl stearate, then blowing purging air through a filter against the cleaning cloth, again rewinding the wet cleaning cloth, and causing expulsion of methyl ethyl ketone (MEK) by vaporization thereby enabling butyl stearate to be lodged in the cleaning cloth. In this case, the amount of butyl stearate lodged in the cleaning cloth may be adjusted arbitrarily by proportionately varying the concentration of butyl stearate in the methyl ethyl ketone (MEK) solution.

Advantageously, the content of the lubricant in the cleaning material is in the approximate range of 0. 1 - 50 wt%.

Though the cleaning operation may be manually carried out, it is preferably implemented by disposing cleaning devices 43 one each opposite the individual metallic rolls 41 as shown in Fig. 2 and causing the cleaning material impregnated with the lubricant to contact the surfaces of the metallic rolls intermittently or continuously and clean the surfaces. The cleaning devices 43 may be of any of various known types. The devices that are disclosed in JP-A-02-28458 and JP-A-04-228111, for example, may be used. In this case again, it is of course necessary to use the cleaning material as impregnated with the lubricant.

This invention is effective not only in giving necessary cleaning to the surfaces of the metallic rolls 41 but also in preventing to the fullest possible extent the cleaning material from being abraded or from inducing secondary adhesion of exfoliated fibers to the surfaces of the metallic rolls 41 even when the cleaning material is caused to contact the surfaces of the metallic rolls 41 at an elevated temperature with high-speed friction.

The invention which concerns the step of pretreating the metallic rolls 41 for use in the calendering treatment prior to the start of the production as illustrated in Fig. 1 and the invention which concerns the cleaning operation performed on the metallic rolls 41 during the course of production as illustrated in Fig. 2 may be carried out either singly or in combination. When they are used in combination, the lubricating treatment by the use of the cleaning material may be effected so that the cleaning material will be impregnated with the lubricant either in the entire surface thereof or in only the opposite end parts thereof which contact the parts of the calender rolls not touched by the surface of the magnetic layer.

The method for the production of a magnetic recording medium according to this invention allows the calendering treatment to be applied invariably and fully effectively to all the types of composite ribbons, no matter whether they are provided on only one surface or on both surfaces thereof with magnetic layers or they are provided with the so-called backcoat layers.

Now, the magnetic coating material 21 to be used in the method for the production of a magnetic recording medium according to this invention will be described below. The magnetic coating material contains a magnetic powder, a binder, and a solvent as main components thereof.

As concrete examples of the magnetic powder to be used herein, a magnetic powder of iron oxide, a powder of a frromagnetic metal, a plate hexagonal ferrite, and chromium dioxide may be cited.

As specific examples of the magnetic powder of iron oxide, γ-Fe₂O₃, Fe₃O₄, berthollides, and the magnetic powder of a Co compound-coated or Co-doped iron oxide may be cited. The term "Co compound" as used herein means a compound which harnesses the magnetic anisotropy of cobalt for enhancing the coercive force thereof.

As concrete examples of the ferromagnetic metal for use as the magnetic powder herein, Fe, Ni, Co, and alloys thereof may be cited. When the magnetic powders having such ferromagnetic metals as α-Fe, Fe-Co, Fe-Ni, Fe-Co-Ni, Co, and Co-Ni as main components thereof are used, they appropriately contain relevant metals (Fe, Co, Ni, etc.) or alloys at concentrations of not less than 70 wt%, preferably not less than 75 wt%. In the case of ferromagnetic metal powders having Fe as a main component thereof and containing at least Co as an additional component, the amount of Co atoms is in the range of 5 - 40 wt%, preferably 6 - 35 wt%, based on the amount of Fe atoms. Appropriately the ferromagnetic metal powders having Fe and/or Co as a main component thereof additionally contain any of the rare earth elements including Y. These ferromagnetic metal powders may be formed of particles having an oxidized surface or a partially carbonized or nitridized surface or of particles having a carbonaceous coating. The ferromagnetic metal powders mentioned above may contain a hydroxide or an oxide in a small amount.

The plate hexagonal ferrite is a magnetic powder formed of hexagonal plate particles having axes of easy magnetization in a direction perpendicular to the plates thereof. As concrete examples of the plate hexagonal ferrite, Ba-ferrite, Sr-ferrite, Pb-ferrite, Ca-ferrite, the ferrites substituted with a metallic atom having a valency equalling the total of valencies of the Fe atoms thereof, and hexagonal Co powder may be cited.

The magnetic powder, when necessary, may be a magnetic powder of CrO₂ crystals in needle shape.

The magnetic powder is generally contained in the magnetic layer in an amount in the approximate range of 100 - 2000 wt%, based on 100 wt% of the binder. The content of the magnetic powder in the magnetic layer is in the range of 50 - 95 wt%, preferably 55 - 90 wt%, based on the total amount of the magnetic layer. If the content of the magnetic powder is unduly large, the magnetic layer will tend to entail such defects as lowered durability because the amount of the resin and other additives in the magnetic layer is proportionately decreased. If this content is unduly small, the magnetic layer will be incapable of producing a high regeneration output.

The magnetic powders enumerated above may be used either singly or in the form of a combination of two or more species. As concrete examples of the binder to be used for the magnetic powder, thermoplastic resins, thermosetting or reactive resins, and resins modified to acquire sensitivity to electron rays may be cited. These binders may be properly combined to suit the characteristic of the medium and the conditions of the production process.

The thermoplastic resin appropriately has a softening temperature of not more than 150°C, an average molecular weight in the range of 5000 - 200000, and a polymerization degree in the approximate range of 50 - 2000. The thermosetting resin, reactive resin, and resin modified to acquire sensitivity to electron rays have average molecular weights and degrees of polymerization on the par with those of the thermoplastic resin. These resins are caused to acquire infinite molecular weights by the reaction of condensation or addition when the magnetic layer which has undergone the steps of coating, drying, and calendering is subsequently heated and/or exposed to electron rays.

As concrete examples of the thermoplastic resin, vinyl chloride type copolymers, polyurethane resin, (meth)acrylic resin, polyester resin, acrylonitrile-butadiene type copolymers, polyamide resin, polyvinyl butyral, nitrocellulose, styrene-butadiene type copolymers, polyvinyl alcohol resin, acetal resin, epoxy type resins, phenoxy type resins, polyether resin, polyfunctional polyethers such as polycaprolactone, polyamide resins, polyimide resins, phenol resins, polybutadiene elastomer, chlorinated rubber, acrylic rubber, isoprene rubber, and epoxy-modified rubbers may be cited.

As concrete examples of the thermosetting resin, polycondensing phenol resins, epoxy resin, polyurethane-setting resin, urea resin, butyral resin, formal resin, melamine resin, alkyd resin, silicone resin, acrylic reactive resin, polyamide resin, epoxy-polyamide resin, saturated polyester resin, and urea formaldehyde resin may be cited.

In the copolymers mentioned above, those which have a hydroxyl group at the terminal or in the side chain thereof are reactive resins which are at an advantage in being capable of easily utilizing the cross-linkage using isocyanate and the modification by the electron ray cross-linkage. These reactive resins may further contain at the terminal or in the side chain thereof such polar groups as acidic polar groups and basic polar groups which are represented by -COOH, -SO₃M, -OSO₃M, -OPO₃M, -PO₃M, -PO₂M, -N⁺R₃Cl⁻, and -NR₂. The inclusion of these polar groups brings the advantage of enhancing the dispersibility of the relevant resins. In the formulas, M stands for H, Li, Na, K, -NR₄, or -NHR₃ and R for an alkyl group or a hydrogen atom.

The resins mentioned above may be used either singly or in the form of a combination of two or more species.

Among other conceivable combinations, the combination of a vinyl chloride type copolymer with a polyurethane resin is used particularly advantageously.

Appropriately, the vinyl chloride type copolymer has a vinyl chloride content in the range of 60 - 95 wt%, preferably 60 - 90 wt% and an average polymerization degree in the approximate range of 100 - 500.

The polyurethane resin which is used in combination with the vinyl chloride type resin is particularly effective in improving the wear resistance of the magnetic layer and the fastness of adhesion of the magnetic layer to the supporting material. It has been polymerized to a number average molecular weight in the approximate range of 500 - 200000 and has a Q value (weight average molecular weight/number average molecular weight) in the approximate range of 1.5 - 4.

At least two different species of urethane resin exhibiting glass transition points, Tg, in the range of -20 °C ≦ Tg ≦ 80 °C, in the binder to be used are used in a total amount in the range of 10 - 90 wt% based on the amount of the binder. The inclusion of the plurality of species of polyurethane resin has an advantage of attaining proper balance among the stability of travel of the medium, the susceptibility of the magnetic layer to the calendering treatment, and the electromagnetic conversion characteristic of the magnetic recording medium at an elevated temperature.

The vinyl chloride type copolymer and the polyurethane resin are advantageously used at a gravimetric mixing ratio in the range of 10 : 90 - 90 : 10.

Optionally, the combination of these resins may additionally incorporate therein various known resins in a total amount of not more than 20 wt% based on the total amount of the combination.

As the cross-linking agent for setting the binder resin, any of various species of polyisocyanate can be used. The cross-linking agent content in the binder resin is appropriately in the range of 1 - 50 wt%, based on 100 wt% of the resin. The cross-linking agent is capable of improving the durability of the deposited layer by being three-dimensionally bound as with the hydroxyl group contained in the binder resin.

Generally for the purpose of hardening the reactive or the thermosetting resin mentioned above, it suffices to subject the resin to a thermosetting treatment which is effected by heating as described above.

The copolymer mentioned above may be modified to acquire sensitivity to electron rays by the introduction therein of a (meth)acrylic type double bond formed of a (meth)acryloyl group by the known technique.

When the resin modified to acquire the sensitivity to electron rays is used, it may incorporate therein any of known polyfunctional acrylates in an amount in the range of 1 - 50 wt% for the purpose of exalting the ratio of cross-linkage thereof.

The binder using the resin modified to acquire the sensitivity to electron rays can be set by the method using electron rays or the method using ultraviolet light described above. When the ultraviolet light is adopted, the binder which contains an electron ray setting resin further incorporates therein any of the known photopolymerizing sensitizers.

The solvent to be contained in the magnetic coating material is not particularly limited. It may be suitably selected in due consideration of the solubility, compatibility, and drying efficiency of the binder. As concrete examples of the solvent effectively usable herein, such diluents or solvents as ketones, aromatic hydrocarbons, esters, alcohols, tetrahydrofuran, and dimethyl formamide may be cited. These solvents may be used either singly or in the form of a combination of two or more members mixed at an arbitrary ratio.

The magnetic coating material generally contains a lubricant. In the various known lubricants, it is particularly advantageous to use a fatty acid and/or a fatty ester. As concrete examples of the fatty acid, monobasic fatty acids having 12 - 24 carbon atoms (possibly containing an unsaturated bond or a branch) may be cited. As concrete examples of the fatty ester, monofatty esters, difatty esters, and trifatty esters formed to react monobasic fatty acids having 10 - 24 carbon atoms (possibly containing an unsaturated bond or a branch) with one of alcohols such as cyclic or polysaccharide-reduced alcohols (such as sorbitans and sorbitols), monovalent, divalent, trivalent, tetravalent, pentavalent, and hexavalent alcohols of 2 - 22 carbon atoms (possibly containing an unsaturated bond or a branch) may be cited. These lubricants may be used either singly or in the form of a combination of two or more species.

As concrete examples of the monobasic fatty acid, lauric acid, myristic acid, palmitic acid, stearic acid, oleic acid, linolic acid, linolenic acid, behenic acid, crucic acid, and elaidic acid may be cited. As concrete examples of the fatty ester, butyl myristate, butyl palmitate, butyl stearate, neopentyl glycol dioleate, sorbitan monostearate, sorbitan distearate, sorbitan tristearate, oleyl oleate, isocetyl stearate, isotridecyl stearate, octyl stearate, isooctyl stearate, amyl stearate, and butoxyethyl stearate may be cited.

The content of the fatty acid and/or fatty ester in the magnetic layer appropriately is in the range of 0.1 - 20 wt%, preferably 1 - 15 wt%, based on the total amount of the magnetic powder.

When the magnetic recording medium is provided with a backcoat layer, the lubricant may be contained in a larger amount on the backcoat layer side so that it will be transferred to the surface of the magnetic layer and consequently utilized for exalting the surface lubricity of the magnetic layer.

The magnetic coating material generally contains such additives as enable this coating material to manifest a lubricating effect, an antistatic effect, a dispersing effect, and a plasticizing effect. For example, silicone oils, fluorine oils, alcohols containing a fluorine-substituted hydrocarbon group, paraffins, nonionic surfactants, cationic surfactants, anionic surfactants, and amphoteric surfactants are effectively usable as such additives.

Further, the magnetic coating material may contain inorganic compounds. As concrete examples of the inorganic compound usable effectively herein, α-alumina, β-alumina, γ-alumina, θ-alumina, δ-alumina, dichromium trioxide, α-iron oxide, goethite, SiO₂, ZnO, TiO₂, ZrO₂, SnO₂, silicon nitride, boron nitride, silicon carbide, titanium carbide, molybdenum carbide, boron carbide, tungsten carbide, calcium carbonate, barium carbonate, strontium carbonate, magnesium carbonate, barium sulfate, zinc sulfide, molybdenum disulfide, tungsten disulfide, and artificial diamond may be cited. These inorganic compounds may be used either singly or in the form of a combination of two or more species.

The inorganic compound is used in an amount in the range of 0.1 - 20 wt% based on the amount of the magnetic powder. The magnetic coating material may contain carbon black. As concrete examples of the carbon black, furnace carbon black, thermal carbon black, and acetylene black may be cited. The particle size of the carbon black may be arbitrarily set. It can be selected so as to suit the balance (surface roughness) among the properties demanded by the medium such as the electric resistance, friction characteristic, and output at the shortest recording wavelength. The plurality of species of carbon black may be used either singly or in the form of a combination of two or more species. One selected species may be used with the particle size distribution suitably selected.

The magnetic coating material may contain the powder of a nonferromagnetic organic substance.

The nonmagnetic supporting material on which the magnetic coating material is deposited may be any of the known films. The materials for these films include polyesters such as polyethylene terephthalate (PET) and polyeythylene naphthalate (PEN), polyolefins, polyamides, polyimides, polyamide imides, polysulfone cellulose triacetate, and polycarbonate,

Now, this invention will be described more specifically below with reference to concrete working examples.

### (Example 1)

A magnetic coating material of the following composition was prepared for the formation of a magnetic layer.

First, the magnetic coating material for the formation of a magnetic layer was prepared from the following composition containing the magnetic powder of an iron alloy (powder of a ferromagnetic metal) having an Hc of 1500 Oe (=119.4KA/m), a specific surface area (by B.E.T.method) of 52 m²/g, and an average major-axis length of 0.3 µm.

### Composition of magnetic coating material for formation of magnetic layer

| | |
|---|---|
| Magnetic powder of iron alloy | 100 parts by weight |
| Vinyl chloride type copolymer (produced by Nippon Zeon K.K. and marketed under product code of "MR-110," polymerization degree 300, polar group - SO₃K) | 12 parts by weight |
| Polyurethane resin (produced by Toyo Boseki Co., Ltd. and marketed under product code of "UR-8700," containing Na sulfonate) | 8 parts by weight |
| α-Al₂O₃ (produced by Sumitomo Chemical Co., Ltd. and marketed under product code of "HIT-60A," average particle diameter 0.20 µm) | 10 parts by weight |
| Methylethyl ketone | 45 parts by weight |
| Toluene | 45 parts by weight |
| Cyclohexanone | 10 parts by weight |

This composition was dispersed in a sand grind mill for 5 hours, made to add 1 part by weight of butyl stearate, 1 part by weight of stearic acid, and 50 parts by weight of a solvent, and further dispersed therein for 1 hour. The resultant magnetic coating material was mixed with 30 parts by weight of a curing agent (produced by Nippon Polyurethane Kogyo K.K. and marketed under trademark designation of "Coronate L") and the produced mixture was passed through a filter to prepare a coating material for the formation of a magnetic layer.

By means of a producing apparatus shown in Fig. 1, a magnetic recording medium was produced as a sample in accordance with the following procedure using the coating material.

First, the step of pretreatment was carried out prior to the start of the production. To be specific, the surfaces of the metallic rolls 41 were cleaned with a methyl ethyl ketone (MEK)/methanol (1/1: weight ratio) mixed solvent. Then, a lubricant-containing solution was produced by mixing methyl ethyl ketone (MEK)/methanol/oleyl oleate (49.5/49.5/1.0: weight ratio) and a non-woven fabric was impregnated with this solution (lubricant content in non-woven fabric: about 5 wt%). The oleyl oleate had a melting point of -15°C. The surfaces of the metallic rolls were wiped with the impregnated non-woven fabric to complete the step of lubricating treatment. By the producing apparatus shown in Fig. 1, a magnetic recording medium (magnetic tape) was continuously produced in a total length of 1000 m. On a nonmagnetic supporting material, 9.8 µm in thickness, made of polyethylene terephthalate (PET), the coating material for the formation of the magnetic layer mentioned above was deposited so much as to produce, on drying, a coating of a thickness of 3.0 µm. The deposited coating was dried subsequent to the application of an oriented magnetic field of 5000 gauses thereto. Then, the coating was subjected to a calendering treatment using a temperature of 90 °C, a linear pressure of 200 kg/cm, and a condition of 5 nips and taken up on the rewinding roll. The surfaces of the metallic rolls which had been used for the calendering treatment were subsequently examined in search of any sign of the so-called seizure.

The magnetic tape which had undergone the calendering treatment mentioned above was further given a thermosetting treatment at 70 °C for 24 hours and then sliced into ribbons, 3/4 inch in width, to produce video tapes of the D2 format grade. The video tapes were tested for dropout.

### (Example 2)

A sample was produced by faithfully following the procedure of Example 1, while changing the oleyl oleate (lubricant) used during the lubricating treatment (the step of pretreatment) to myristic acid (melting point: 53.9°C). This sample was rated in the same manner as in Example 1.

### (Example 3)

In the pretreating step of Example 1, the lubricating treatment was omitted and a simple cleaning treatment using a solvent was performed. Instead of carrying out the lubricating treatment at the pretreating step, the nonwoven fabric impregnated with a hexane/butyl stearate mixed solution (98.0/2.0: weight ratio) and then dried (the cleaning material), was attached to the cleaning rolls. The cleaning rolls were set so as to contact onto the metallic rolls and were rotated in the direction opposite to the direction of rotation of the metallic rolls, at a rate of 5 mm/sec of the nonwoven fabric. A sample was produced by repeating the procedure of Example 1 excepting the cleaning treatment mentioned above. It was rated in the same manner as in Example 1. The butyl stearate had a melting point of 21.3 °C.

### (Example 4)

A sample was produced by faithfully following the procedure of Example 3, while changing the butyl stearate (lubricant) to stearic acid (melting point: 69.6 °C). It was rated in the same manner as in Example 3.

### (Example 5)

A sample was produced by faithfully following the procedure of Example 1, while changing the magnetic powder to a magnetic iron oxide in the form of a Co compound coated (coercive force: Hc 680 Oe (=54.1KA/m)) and sitting the magnetic tape into ribbons, 1/2 inch in width, to produce video tapes of the VHS format grade. The sample was rated in the same manner as in Example 1.

### (Example 6)

A sample was produced by faithfully following the procedure of Example 1, while changing the magnetic powder to CrO₂ (coercive force: Hc 600 Oe (=47.7KA/m)) and slitting the magnetic tape into ribbons, 1/2 inch in width, to produce video tapes of the VHS format grade. The sample was rated in the same manner as in Example 1.

### (Example 7)

A sample was produced by faithfully following the procedure of Example 1, while additionally using the same cleaning rolls as used in Example 3 during the calendering treatment. The sample was rated in the same manner as in Example 1.

### (Comparative Example 1)

A sample was produced by following the procedure of Example 1, while omitting the lubricating treatment at the pretreating step. The sample was rated in the same manner as in Example 1.

### (Comparative Example 2)

A sample was produced by following the procedure of Example 3, while changing the butyl stearate to behenic acid (melting point: 79.9 °C) and the temperature of the calendering treatment to 75 °C. The sample was rated in the same manner as in Example 3.

### (Comparative Example 3)

A sample was produced by following the procedure of Example 5, while omitting the lubricating treatment at the pretreating step. The sample was rated in the same manner as in Example 5.

### (Comparative Example 4)

A sample was produced by following the procedure of Example 6, while omitting the lubricating treatment at the pretreating step. The sample was rated in the same manner as in Example 6.

The phenomena "seizure of surface of metallic roll" and "dropout" involved in Examples 1- 7 and Comparative Example 1- 4 were specifically rated as follows.

### Seizure of surface of metallic roll

After the step of calendering treatment, the surfaces of the metallic rolls were wiped with a nonwoven fabric impregnated with methyl ethyl ketone (MEK) and the nonwoven fabric was then visually examined in search of any sign of dirt adhering thereto.

### Dropout of metallic powder tape

A given magnetic tape was played on a recorder (produced by Sony Corporation and marketed under product code of "DVR-10") and then tested for dropout by means of a dropout counter (produced by Shibasoku K.K.) operated under the conditions of 10 µsec-12 dB.

### Dropout of Co compound coated iron oxide and chromium dioxide tapes

A given magnetic tape was played on a recorder (produced by Victor Company of Japan, Ltd and marketed under product code of "VTR BR7000A") and tested for dropout by means of a dropout counter (produced by Shibasoku K.K.) operated under the conditions of 15 µsec-30 dB.

The test results are shown in Table 1 below.

**TABLE 1**

| | Dropout (number/minute) | Seizure on metallic roll |
|---|---|---|
| Example 1 | 2/minute | NO |
| Example 2 | 3/minute | NO |
| Example 3 | 2/minute | NO |
| Example 4 | 1/minute | NO |
| Example 5 | 0.7/minute | NO |
| Example 6 | 0.5/minute | NO |
| Example 7 | 0.8/minute | NO |
| C.E. 1 | 96/minute | YES |
| C.E. 2 | 114/minute | NO |
| C.E. 3 | 35/minute | YES |
| C.E. 4 | 17/minute | YES |
| C.E.: Comparative Example | | |

The effect of this invention is evident from the results shown above. To be specific, the method for the production of a magnetic recording medium which comprises preparatorily cleaning the surfaces of the metallic rolls to be used for the calendering treatment and thereafter subjecting the surfaces of the metallic rolls to a lubricating treatment with a lubricant-containing solution permits the calendering treatment to be stably carried out without entailing fast adhesion of an extraneous substance to the surfaces of the metallic rolls, and the method for the production of a magnetic recording medium which comprises intermittently or continuously cleaning the surfaces of the metallic rolls to be used for the calendering treatment with a cleaning material impregnated with a lubricant manifests an effect of preventing the cleaning material from shedding fibers, precluding the heretofore problematic phenomenon of dropout ascribable to exfoliated fibers, and avoiding a decline in the yield of production.

## Claims

1. A method for the production of a magnetic recording medium by applying to one surface of a nonmagnetic supporting material a magnetic coating material comprising a magnetic powder and a binder thereby forming a magnetic layer, drying the applied magnetic layer, and thereafter subjecting the dried magnetic layer to a calendering treatment, characterised in that the method further comprises a step of pretreating metallic rolls for use in said calendering treatment prior to starting the production, and that said pretreating step comprises the steps of cleaning the surfaces of said metallic rolls to be used for said calendering treatment with a solvent and subsequently treating said surfaces of said metallic rolls with a lubricant-containing solution.

2. A method according to claim 1, wherein said lubricant has a melting point not higher than the temperature at which said calendering treatment is carried out.

3. A method for the production of a magnetic recording medium by applying to one surface of a nonmagnetic supporting material a magnetic coating material comprising a magnetic powder and a binder thereby forming a magnetic layer, drying the applied magnetic layer, and thereafter subjecting the dried magnetic layer to a calendering treatment, characterised in that said calendering treatment includes an operation of cleaning surfaces of metallic rolls, and that said cleaning operation comprises intermittently or continuously cleaning said surfaces of said metallic rolls for use in said calendering treatment with a cleaning material impregnated with a lubricant.

4. A method according to claim 3, wherein said lubricant has a melting point not higher than the temperature at which said calendering treatment is carried out.

5. A method according to claim 4, wherein said cleaning material is nonwoven fabric, foamed urethane sheet, cleaning cloth, or foam rubber sponge.

6. A method according to claim 4 or claim 5, wherein the content of said lubricant in said cleaning material is in the range of 0.1 - 50 wt%.

7. A method for the product ion of a magnetic recording medium by applying to one surface of a nonmagnetic supporting material a magnetic coating material comprising a magnetic powder and a binder thereby forming a magnetic layer, drying the applied magnetic layer, and thereafter subjecting the dried magnetic layer to a calendering treatment, characterised in that the method further comprises a step of pretreating metallic rolls for use in said calendering treatment prior to starting the production, said pretreating step comprises the steps of cleaning the surfaces of said metallic rolls to be used for said calendering treatment with a solvent and subsequently treating said surfaces of said metallic rolls with a lubricant-containing solution, said calendering treatment includes an operation of cleaning surfaces of metallic rolls, and said cleaning operation comprises intermittently or continuously cleaning said surfaces of said metallic rolls for use in said calendering treatment with a cleaning material impregnated with a lubricant.

8. A method according to claim 7, wherein said lubricant has a melting point not higher than the temperature at which said calendering treatment is carried out.
